# EUROPÄISCHE PATENTSCHRIFT

(11) **EP 3 437 012 B1**
(45) Veröffentlichungstag und Bekanntmachung des Hinweises auf die Patenterteilung: **24.08.2022**
(21) Anmeldenummer: 17712733.9
(22) Anmeldetag: 17.03.2017
(51) Int. Cl.: G06F 21/57

(54) **VERFAHREN, PROZESSOR UND GERÄT ZUR INTEGRITÄTSPRÜFUNG VON NUTZERDATEN**
METHOD, PROCESSOR AND DEVICE FOR CHECKING THE INTEGRITY OF USER DATA
PROCÉDÉ, PROCESSEUR ET APPAREIL POUR VÉRIFIER L'INTÉGRITÉ DE DONNÉES D'UTILISATEURS

(30) Priorität: 31.03.2016 DE 102016205289
(43) Veröffentlichungstag der Anmeldung: 06.02.2019
(73) Patentinhaber: Siemens Aktiengesellschaft, 80333 München (DE)
(72) Erfinder: MERLI, Dominik, 86690 Mertingen (DE); SCHNEIDER, Daniel, 80796 München (DE)
(74) Vertreter: Siemens Patent Attorneys
(86) Internationale Anmeldenummer: PCT/EP2017/056403
(87) Internationale Veröffentlichungsnummer: WO 2017/167589

(56) Entgegenhaltungen:
- US-A1- 2006 059 553
- US-A1- 2014 068 276
- Tcg: "TCG TPM Main Part 1 Design Principles 32 3 4 Copyright TCG TPM Main Part 1 Design Principles Specification Version 1.2", , 1. März 2011 (2011-03-01), XP055292841, Gefunden im Internet: URL:http://trustedcomputinggroup.org/wp-co ntent/uploads/TPM-Main-Part-1-Design-Princ iples_v1.2_rev116_01032011.pdf [gefunden am 2016-08-02]
- Tcg: "TCG TPM Main Part 3 Commands Specification Version 1.2 Level 2 Revision 116 1 March 2011 TCG Published", , 1. März 2011 (2011-03-01), XP055292849, Gefunden im Internet: URL:http://trustedcomputinggroup.org/wp-co ntent/uploads/TPM-Main-Part-3-Commands_v1. 2_rev116_01032011.pdf [gefunden am 2016-08-02]
- Thomas Eisenbarth ET AL: "Reconfigurable Trusted Computing in Hardware", , 2. November 2007 (2007-11-02), XP055374221, Gefunden im Internet: URL:https://pdfs.semanticscholar.org/3d04/ ea80057cd1dd4d419154432e7ef84831a86b.pdf [gefunden am 2017-05-18]

## Beschreibung

Die Erfindung bezieht sich auf ein Verfahren und einen Prozessor zur Integritätsprüfung von Nutzerdaten.

Eingebettete Systeme umfassen eine Kombination von Hard- und Softwarekomponenten, die in einem technischen Kontext eingebunden sind. Ihre Aufgabe ist es, insbesondere ein System zu steuern, zu regeln oder zu überwachen. Sie vereinen Mikroprozessoren, FPGAs, RAM-Speicher, Flash-Speicher, und diverse Peripherien in einer Plattform. Der Schutz dieser Geräte spielt eine zunehmend wichtigere Rolle, um einen ordnungsgemäßen Betrieb gewährleisten zu können.

Eine der wichtigsten Anforderungen dafür ist die Integrität, d.h. der Schutz gegen nicht-autorisierte Manipulation eines Geräts. Beispielsweise müssen öffentliche Schlüssel auf Integrität überprüft werden um sicher zu stellen, dass diese nachweislich unverändert sind. Integritätsschutz teilt sich in zwei Bereiche auf:
1) Integritätsschutz von nichtflüchtig gespeicherten Daten, die das Booten und die grundlegenden Funktionen eines Geräts beinhalten. Diese Daten können auch im ausgeschalteten Zustand manipuliert werden. Schutzmaßnahmen sind Secure Boot und ähnliche Mechanismen.
2) Integritätsschutz von Laufzeit-Daten, die während des Betriebs des Geräts berechnet werden und zu weiteren Berechnungen benötigt werden. Diese Daten können von einem Angreifer manipuliert werden, der zur Laufzeit Zugriff auf das Gerät erhält.

Aus dem Stand der Technik sind das Dokument US 8,531,247 B2, das Dokument US 8,892,616 B2, das Dokument US 8,300,811 B2, das Dokument US 9,147,088 B2, das Dokument EP 2 605 445 B1, das Dokument EP 2 870 565 A1, das Dokument EP 2 891 102 A1 und das Dokument US 8 843 761 B2 bekannt.

US 2014/068276 A1 betrifft die Kollisionsvermeidung beim Zugriff unterschiedlicher Applikationen auf den gleichen Speicherbereich eines Sicherheitsmoduls.

Eine Aufgabe der vorliegenden Erfindung ist es, ein Verfahren und einen Prozessor bereitzustellen, die es erlauben, eine Integritätsprüfung von Nutzerdaten mit hoher Sicherheit durchzuführen.

Die Aufgabe wird durch die in den unabhängigen Ansprüchen angegebenen Merkmale gelöst. In den Unteransprüchen sind vorteilhafte Weiterbildungen der Erfindung dargestellt.

Gemäß einem ersten Aspekt betrifft die Erfindung ein Verfahren zur Integritätsprüfung von verschlüsselten Nutzerdaten mittels eines Prozessors gemäß Anspruch 1.

Unter einem "Prozessor" kann im Zusammenhang mit der Patentanmeldung beispielsweise eine Maschine oder eine elektronische Schaltung verstanden werden. Bei einem Prozessor kann es sich insbesondere um einen FPGA (engl. Field Programmable Gate Array), integrierten Schaltkreis (engl. Integrated Circuit, IC), einen Hauptprozessor (engl. Central Processing Unit, CPU), einen Mikroprozessor oder einen Mikrokontroller handeln. Auch kann unter einem Prozessor ein virtualisierter Prozessor, der auch als Soft-CPU bezeichnet wird, verstanden werden. Es kann sich beispielsweise auch um einen programmierbaren Prozessor handeln, der mit Konfigurationsschritten zur Ausführung des genannten erfindungsgemäßen Verfahrens ausgerüstet wird oder mit Konfigurationsschritten derart konfiguriert ist, dass der programmierbare Prozessor die erfindungsgemäßen Merkmale des Gerätes, des Systems oder Teile des Systems aufweist.

Unter einem "sicherheitsgeschützten Speichermodul" kann im Zusammenhang mit der Patentanmeldung beispielsweise ein Speichermodul verstanden werden, auf das insbesondere der Prozessor lesend zugreifen kann. Insbesondere werden direkte prozessorexterne Zugriffe auf das sicherheitsgeschützte Speichermodul unterbunden. Vorzugsweise kann auf das Speichermodul insbesondere während eines sicherheitsgeschützten Betriebsmodus, beispielsweise ein sicherheitsgeschützter Betriebsmodus des Prozessors, schreibend durch den Prozessor zugegriffen werden. Sollen Daten, beispielsweise Prüfwerte, auf dem sicherheitsgeschützten Speichermodul gespeichert werden, so werden diese einer Schnittstelle oder einem Übertragungsmodul des Prozessors übergeben. Beispielsweise entscheidet eine Steuerschaltung des Prozessors, die als Steuermodul ausgebildet sein kann, dann vorzugsweise anhand des Betriebsmodus, beispielsweise dem sicherheitsgeschützten Betriebsmodus oder einem Laufzeitmodus, ob die Daten in das sicherheitsgeschützte Speichermodul geschrieben werden oder die Daten des sicherheitsgeschützten Speichermoduls gelesen werden können.

Unter einem "Übertragungsmodul" kann im Zusammenhang mit der Patentanmeldung beispielsweise eine Schnittstelle oder ein Bus verstanden werden, der insbesondere dazu geeignet ist Daten zu übertragen und/oder zu empfangen. Ein Übertragungsmodul kann beispielsweise prozessorintern Daten übertragen und/oder empfangen. Alternativ kann ein Übertragungsmodul eine Schnittstelle oder in Bus sein, mit dessen Hilfe Daten an den Prozessor übertragen und/oder von diesem empfangen werden.

Unter einem "Prüfwert" kann im Zusammenhang mit der Patentanmeldung beispielsweise ein Hashwert, eine digitale Signatur und/oder eine Prüfsumme verstanden werden, die beispielsweise mittels einer Funktion, beispielsweise einer Prüfwertfunktion, über Nutzerdaten berechnet wurde. Eine Prüfwertfunktion kann dabei eine Einwegfunktion, insbesondere eine kryptographische Hash-Funktion, beispielsweise eine Funktion, die den Keyed-Hash Message Authentication Code Algorithmus (HMAC) implementiert, sein.

Unter einem "sicherheitsgeschützten Betriebsmodus" kann im Zusammenhang mit der Patentanmeldung beispielsweise ein Betriebsmodus verstanden werden, während dem vorzugsweise nur vertrauenswürdige Funktionen, beispielsweise eines Betriebssystems, ausgeführt werden. Der "sicherheitsgeschützte Betriebsmodus" kann beispielsweise eine Bootphase eines Gerätes sein, das insbesondere nach Abschluss des Bootprozesses den sicherheitsgeschützten Betriebsmodus beispielsweise durch einen Interrupt oder einen Maschinenbefehl beendet. Der sicherheitsgeschützte Betriebsmodus kann aber auch ein Betriebsmodus sein, der beispielsweise während der Fertigung und des Testens eines Gerätes mit einem erfindungsgemäßen Prozessor, eingeschaltet werden kann. Während des sicherheitsgeschützten Betriebsmodus kann beispielsweise nur vertrauenswürdiger Programmcode ausgeführt werden, der beispielsweise durch den Gerätehersteller digital signiert wurde. Während des sicherheitsgeschützten Betriebsmodus werden insbesondere nur geräteinterne Daten verarbeitet und es wird insbesondere eine Kommunikation mit anderen Geräten oder Netzwerken unterbunden. Während des sicherheitsgeschützten Betriebsmodus kann beispielsweise davon ausgegangen werden, dass Programmcode oder Nutzerdaten durch Unberechtigte nicht manipuliert werden oder manipuliert werden können.

Das Einschalten des sicherheitsgeschützten Betriebsmodus kann beispielsweise mittels Sicherheitsmechanismen, beispielsweise mechanische Schalter, insbesondere in der Form von Jumpern, kryptographische Funktionen, insbesondere in der Form von digitalen Signaturen, digitalen Zertifikaten oder Passwörtern, geschützt sein.

Unter einem "Laufzeitmodus" kann im Zusammenhang mit der Patentanmeldung beispielsweise ein Betriebsmodus verstanden werden, bei dem ein Betriebssystem, insbesondere Anwendungscode, beispielsweise Softwarekomponenten von geräteherstellerfremden Quellen, ausführt. Während des Laufzeitmodus kann beispielsweise davon ausgegangen werden, dass Programmcode oder Nutzerdaten durch Unberechtigte manipuliert werden. Der Laufzeitmodus und der sicherheitsgeschützte Betriebsmodus schließen sich gegenseitig aus. Was insbesondere bedeutet, dass während des sicherheitsgeschützten Betriebsmodus nicht der Laufzeitmodus eingeschaltet sein kann und während des Laufzeitmodus nicht der sicherheitsgeschützte Betriebsmodus eingeschaltet sein kann.

Unter "Laufzeit" kann im Zusammenhang mit der Patentanmeldung beispielsweise eine Betriebszeit eines Gerätes vom Einschalten des Gerätes bis zum Ausschalten des Gerätes verstanden werden. Die Laufzeit umfasst dabei beispielsweise einen vertrauenswürdigen Zeitraum, während dessen insbesondere ein sicherheitsgeschützter Betriebsmodus eingeschaltet ist, und einen potentiell nicht vertrauenswürdigen Zeitraum, während dessen insbesondere der sicherheitsgeschützte Betriebsmodus ausgeschaltet ist und während dessen insbesondere der Laufzeitmodus eingeschaltet ist.

Unter "prozessorextern" kann im Zusammenhang mit der Patentanmeldung beispielsweise verstanden werden, dass beispielsweise Komponenten und/oder Funktionen kein integraler Bestandteil des Prozessors sind. Diese Komponenten und/oder Funktionen können beispielsweise durch Softwarekomponenten eines Betriebssystems realisiert sein und können insbesondere auf den Prozessor und seine Schnittstellen zugreifen. Vorzugsweise kann auf den Prozessor nur über seine Schnittstellen zugegriffen werden.

Unter "prozessorintern" kann im Zusammenhang mit der Patentanmeldung beispielsweise verstanden werden, dass beispielsweise Komponenten und/oder Funktionen ein integraler Bestandteil des Prozessors sind. Diese Komponenten und/oder Funktionen können beispielsweise durch Schaltungen auf dem Prozessor, insbesondere eine logische Schaltung, realisiert werden. Auf prozessorinterne Komponenten und/oder Funktionen kann insbesondere nicht direkt zugegriffen werden. Ein Zugriff erfolgt vorzugsweise über definierte Schnittstellen.

Unter "Nutzerdaten" können im Zusammenhang mit der Patentanmeldung beispielsweise Programmkomponenten, Konfigurationsinformationen, Messdaten und/oder Steuerdaten verstanden werden, die insbesondere auch verschlüsselt sein können.

Das Verfahren ist insbesondere vorteilhaft, da der erste Prüfwert, oder auch Originalprüfwert genannt, direkt im Prozessor, insbesondere einem FPGA, gespeichert werden kann, beispielsweise in Speicherblöcken des FPGA (sog. Block RAM) oder in Flip-Flops. Es ist damit insbesondere nicht notwendig den ersten Prüfwert bei einer Integritätsprüfung an das Betriebssystem zu übertragen.

Dadurch kann beispielsweise erreicht werden, dass eine Implementierung einer Prüfwertfunktion, beispielsweise eine kryptographische Funktion, insbesondere in der Form einer Einwegfunktion, zur Berechnung des Prüfwertes, also des ersten Prüfwertes und/oder des zweites Prüfwertes, auf dem Prozessor vermieden wird. Mit anderen Worten wird dadurch insbesondere erreicht, dass die Integrität der Nutzerdaten durch den Prozessor überprüft werden kann, ohne auf dem Prozessor Ressourcen für die Prüfwertfunktion zur Berechnung des Prüfwertes oder geheime Schlüssel auf dem Prozessor zu verwalten und/oder zu speichern. Damit ist es somit insbesondere möglich, die erste Prüfsumme und/oder die zweite Prüfsumme außerhalb des Prozessors, also prozessorextern, zu berechnen.

Es ist aber auch möglich, dass beispielsweise die Prüfwertfunktion zur Berechnung des Prüfwertes, also des ersten Prüfwertes und/oder des zweites Prüfwertes, auf dem Prozessor implementiert ist. Damit ist es beispielsweise möglich, dass der erste Prüfwert und/oder der zweite Prüfwert vom Prozessor selbst, also prozessorintern, berechnet wird.

Der erste Prüfwert wird insbesondere nach seiner Berechnung, wie oben erwähnt, in einem Verfahrensschritt in dem sicherheitsgeschützten Speichermodul gespeichert. Dies geschieht insbesondere unabhängig davon, ob der erste Prüfwert prozessorintern oder prozessorextern berechnet wird.

Das Gleiche gilt insbesondere für den zweiten Prüfwert, da dieser auch prozessorintern oder prozessorextern berechnet werden kann. Der zweite Prüfwert kann, falls notwendig, an den Prozessor zum Vergleichen übertragen werden.

Bei einer ersten Ausführungsform des Verfahrens ist das sicherheitsgeschützte Speichermodul während einer Laufzeit des Prozessors einmalig beschreibbar oder das sicherheitsgeschützte Speichermodul ist einmalig beschreibbar.

Dadurch, dass das sicherheitsgeschützte Speichermodul einmalig beschreibbar ist, kann beispielsweise während dem sicherheitsgeschützten Betriebsmodus insbesondere der erste Prüfwert vorzugsweise unveränderbar im sicherheitsgeschützten Speichermodul gespeichert werden. Dies kann beispielsweise einmalig zur Laufzeit des Prozessors oder eines Gerätes, das den Prozessor verwendet. Alternativ kann das sicherheitsgeschützte Speichermodul beispielsweise während seiner gesamten Lebensdauer nur einmalig beschrieben werden. In einem solchen Fall kann insbesondere auf dem sicherheitsgeschützten Speichermodul einmalig beispielsweise der erste Prüfwert gespeichert werden, wenn der sicherheitsgeschützter Betriebsmodus eingeschaltet ist, wobei der der sicherheitsgeschützter Betriebsmodus vorzugsweise nur während der Fertigung des Prozessors oder eines Gerätes das den Prozessor verwendet eingeschaltet wird

Bei dem erfindungsgemäßen Verfahren wird während des sicherheitsgeschützten Betriebsmodus zusätzlich ein Geheimnis in dem sicherheitsgeschützten Speichermodul gespeichert.

Das Verfahren ist insbesondere vorteilhaft, um beispielsweise zusätzliche kryptographische Funktionen und/oder Sicherheitsmechanismen mit dem Geheimnis, beispielsweise ein öffentlicher kryptographischer Schlüssel und/oder ein privater kryptographischer Schlüssel eines asymmetrischen kryptographischen Verfahrens und/oder ein symmetrischer kryptographischer Schlüssel eines symmetrischen Verfahrens, zu nutzen. Damit können beispielsweise die Nutzerdaten verschlüsselt oder entschlüsselt werden.

Bei dem erfindungsgemäßen Verfahren wird, falls beim Vergleichen des ersten Prüfwertes und des zweiten Prüfwertes eine ausreichende Übereinstimmung festgestellt wird, beim Bereitstellen zusätzlich das Geheimnis bereitgestellt.

Das Verfahren ist insbesondere vorteilhaft, um beispielsweise einen kryptographischen Schlüssel zum Entschlüsseln der Nutzerdaten bereitzustellen. Dadurch kann beispielsweise für die Nutzerdaten ein möglichst hoher kryptographischer Schutz (oder auch Sicherheit) erreicht werden.

Bei einer weiteren Ausführungsform des Verfahrens wird, falls beim Vergleichen des ersten Prüfwertes und des zweiten Prüfwertes eine ausreichende Übereinstimmung festgestellt wird, das Geheimnis als ein Eingabeparameter für eine kryptographische Funktion verwendet.

Das Verfahren ist insbesondere vorteilhaft, um beispielsweise einen kryptographischen Schlüssel zum Entschlüsseln der Nutzerdaten bereitzustellen. Dadurch kann beispielsweise für die Nutzerdaten ein möglichst hoher kryptographischer Schutz (oder auch Sicherheit) erreicht werden.

Bei einer weiteren Ausführungsform des Verfahrens wird innerhalb eines vorgegebenen Zeitintervalls der zweite Prüfwert zum Vergleichen erwartet, wobei das vorgegebene Zeitintervall insbesondere mittels eines Watchdogs berechnet wird, wobei bei einem Überschreiten des vorgegebenen Zeitintervalls die Steuerinformation bereitgestellt wird.

Das Verfahren ist insbesondere vorteilhaft, um beispielsweise einen hohen kryptographischen Schutz der Nutzerdaten durch eine Integritätsprüfung innerhalb eines vorgegebenen Zeitraums zu erzwingen.

Bei einer weiteren Ausführungsform des Verfahrens berechnet der Prozessor den ersten Prüfwert und/oder den zweiten Prüfwert mittels einer prozessorintern implementierten Prüfwertfunktion.

Das Verfahren ist insbesondere vorteilhaft, um beispielsweise eine möglichst hohe Sicherheit der Integritätsprüfung der Nutzerdaten zu erreichen.

Bei einer weiteren Ausführungsform des Verfahrens wird mit einer Softwarekomponente der erste Prüfwert und/oder der zweite Prüfwert mittels einer prozessorextern implementierten Prüfwertfunktion berechnet.

Das Verfahren ist insbesondere vorteilhaft, um beispielsweise eine möglichst hohe Sicherheit und eine flexible Implementierung der Integritätsprüfung der Nutzerdaten zu erreichen. Insbesondere kann bei der Implementierung des Prozessors auf eine prozessorinterne Implementierung einer Prüfwertfunktion verzichtet werden. Hierdurch kann erreicht werden, dass beispielsweise unterschiedlichste Prüfwertfunktionen bzw. unterschiedliche kryptographische Funktionen verwendet werden können.

Gemäß einem weiteren Aspekt betrifft die Erfindung einen Prozessor zur Integritätsprüfung von Nutzerdaten gemäß Anspruch 7.

Bei einer ersten Ausführungsform des Prozessors umfasst der Prozessor ein erstes Übertragungsmodul zum Übertragen des ersten Prüfwertes während des sicherheitsgeschützten Betriebsmodus und/oder zum Übertragen des zweiten Prüfwertes während des Laufzeitmodus.

Gemäß einem weiteren Aspekt betrifft die Erfindung ein Gerät zur Integritätsprüfung von Nutzerdaten gemäß Anspruch 9.

Beim erfindugsgemäßen Gerät ist der sicherheitsgeschützte Betriebsmodus und/oder der Laufzeitmodus ein Betriebsmodus des Prozessors und/oder des Gerätes.

Bei einer weiteren Ausführungsform des Gerätes umfasst das Gerät ein zweites Übertragungsmodul zum Übertragen des ersten Prüfwertes an den Prozessor während des sicherheitsgeschützten Betriebsmodus und/oder ein drittes Übertragungsmodul zum Übertragen des zweiten Prüfwertes an den Prozessor während des Laufzeitmodus.

Bei einer weiteren Ausführungsform des Gerätes umfasst das Gerät ein Verarbeitungsmodul zum Verarbeiten der Steuerinformation des Prozessors.

Des Weiteren wird ein Computerprogrammprodukt mit Programmbefehlen zur Durchführung des genannten erfindungsgemäßen Verfahrens beansprucht.

Zusätzlich wird eine Variante des Computerprogrammproduktes mit Programmbefehlen zur Konfiguration eines Erstellungsgeräts, beispielsweise ein 3D-Drucker oder ein zur Erstellung von Prozessoren/Geräten geeignetes Gerät, beansprucht, wobei das Erstellungsgerät mit den Programmbefehlen derart konfiguriert wird, dass der genannte erfindungsgemäße Prozessor oder das erfindungsgemäße Gerät erstellt wird.

Darüber hinaus wird eine Bereitstellungsvorrichtung zum Speichern und/oder Bereitstellen des Computerprogrammprodukts beansprucht. Die Bereitstellungsvorrichtung ist beispielsweise ein Datenträger, der das Computerprogrammprodukt speichert und/oder bereitstellt. Alternativ und/oder zusätzlich ist die Bereitstellungsvorrichtung beispielsweise ein Netzwerkdienst, ein Computersystem, ein Serversystem, insbesondere ein verteiltes Computersystem, ein cloudbasiertes Rechnersystem und/oder virtuelles Rechnersystem, welches das Computerprogrammprodukt vorzugsweise in Form eines Datenstroms speichert und/oder bereitstellt.

Diese Bereitstellung erfolgt beispielsweise als Download in Form eines Programmdatenblocks und/oder Befehlsdatenblocks, vorzugsweise als Datei, insbesondere als Downloaddatei, oder als Datenstrom, insbesondere als Downloaddatenstrom, des vollständigen Computerprogrammprodukts. Diese Bereitstellung kann beispielsweise aber auch als partieller Download erfolgen, der aus mehreren Teilen besteht und insbesondere über ein Peer-to-Peer Netzwerk heruntergeladen oder als Datenstrom bereitgestellt wird. Ein solches Computerprogrammprodukt wird beispielsweise unter Verwendung der Bereitstellungsvorrichtung in Form des Datenträgers in ein System eingelesen und führt die Programmbefehle aus, sodass das erfindungsgemäße Verfahren auf einem Computer zur Ausführung gebracht wird oder das Erstellungsgerät derart konfiguriert, dass dieses den erfindungsgemäßen Prozessor oder das erfindungsgemäße Gerät erstellt.

Die oben beschriebenen Eigenschaften, Merkmale und Vorteile dieser Erfindung sowie die Art und Weise, wie diese erreicht werden, werden klarer und deutlicher verständlich im Zusammenhang mit der folgenden Beschreibung der Ausführungsbeispiele, die im Zusammenhang mit den Figuren näher erläutert werden. Dabei zeigen in schematischer Darstellung:
- Fig. 1: ein Ablaufdiagramm eines ersten Ausführungsbeispiels des offenbarten Verfahrens;
- Fig. 2: einen Prozessor eines zweites Ausführungsbeispiels, der das offenbarte Verfahren implementiert;
- Fig. 3: einen Prozessor eines dritten Ausführungsbeispiels, der das offenbarte Verfahren implementiert;
- Fig. 4: einen Prozessor eines vierten Ausführungsbeispiels, der das offenbarte Verfahren implementiert;
- Fig. 5: ein Gerät eines fünften Ausführungsbeispiels mit einem Prozessor, der das offenbarte Verfahren implementiert;

In den Figuren sind funktionsgleiche Elemente mit denselben Bezugszeichen versehen, sofern nichts anderes angegeben ist.

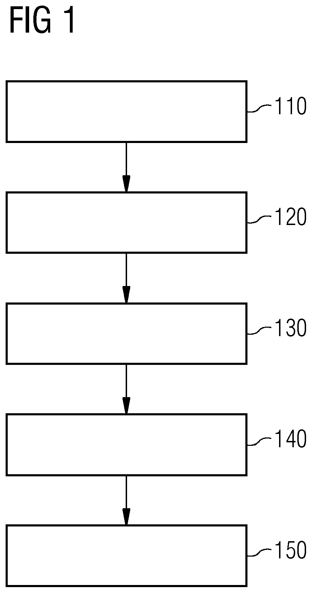

Fig. 1 zeigt ein Ablaufdiagramm eines ersten Ausführungsbeispiels des offenbarten Verfahrens.

Das Verfahren ist in der Lage, eine Integritätsprüfung von Nutzerdaten mittels eines Prozessors eines Gerätes durchzuführen. Mit anderen Worten kann das Verfahren die Integrität von Daten oder Nutzerdaten mittels einer Prüfwertfunktion, beispielsweise eine Hash-Funktion, überprüfen. Die Prüfwertfunktion errechnet insbesondere aus Nutzerdaten, beispielsweise einer Nachricht, mit einer beliebigen Länge einen Prüfwert mit einer festen vorbestimmten Länge.

Hierzu wird in einem ersten Verfahrensschritt 110 ein erster Prüfwert über die Nutzerdaten während eines sicherheitsgeschützten Betriebsmodus berechnet. Mit anderen Worten wird zu einem ersten Zeitpunkt, der auch als sicherheitsgeschützter Betriebsmodus bezeichnet werden kann, ein Prüfwert, beispielsweise ein Hashwert, über die Nutzerdaten, beispielsweise eine Nachricht, berechnet. Der erste Prüfwert kann auch als Originalwert oder Referenzwert bezeichnet werden.

In einem zweiten Verfahrensschritt 120 wird der erste Prüfwert in einem sicherheitsgeschützten Speichermodul des Prozessors während des sicherheitsgeschützten Betriebsmodus abgespeichert.

Der sicherheitsgeschützte Betriebsmodus wird entweder direkt nach dem Abspeichern des ersten Prüfwertes beendet oder, falls notwendig, werden zunächst noch weitere Funktionen ausgeführt, bevor der sicherheitsgeschützte Betriebsmodus beendet wird.

Nach Beendigung des sicherheitsgeschützten Betriebsmodus wird der Laufzeitmodus eingeschaltet. Um während des Laufzeitmodus die Integrität der Nutzerdaten zu überprüfen, wird in einem dritten Verfahrensschritt ein zweiter Prüfwert über die Nutzerdaten während des Laufzeitmodus berechnet.

Der zweite Prüfwert wird dem Prozessor übermittelt, sodass der Prozessor in einem vierten Verfahrensschritt den ersten Prüfwert und den zweiten Prüfwert vergleichen kann. Alternativ können dem Prozessor die notwendigen Informationen, beispielsweise Nutzerdaten oder Speicheradresse der Nutzerdaten, übermittelt werden, sodass der Prozessor selbst die Berechnung des zweiten Prüfwertes vornehmen kann und anschließend den Vergleich des ersten Prüfwertes mit dem zweiten Prüfwert durchführt.

Mit anderen Worten wird während des Laufzeitmodus prozessorintern die Integrität der Nutzerdaten überprüft.

Nachdem das Vergleichen des ersten Prüfwertes mit dem zweiten Prüfwert durchgeführt wurde, stellt der Prozessor in einem fünften Verfahrensschritt 150 eine Steuerinformation während des Laufzeitmodus bereit, wobei die Steuerinformation ein Ergebnis des Vergleichens umfasst.

Vorzugsweise sollten die erste Prüfsumme und die zweite Prüfsumme identisch sein, sodass der Prozessor die Integrität der Nutzerdaten bestätigen kann. Wird jedoch eine nicht ausreichende Übereinstimmung der ersten Prüfsumme mit der zweiten Prüfsumme festgestellt, so kann der Prozessor beispielsweise mit der Steuerinformation Funktionen des Prozessors oder des Gerätes ausschalten.

Mit anderen Worten wird zu einem späteren Zeitpunkt, auch Laufzeitmodus genannt, die Berechnung des zweiten Prüfwertes über die zu diesem Zeitpunkt aktuellen Nutzerdaten berechnet. Der ermittelte zweite Prüfwert wird mit dem zuvor ermittelten Prüfwert verglichen. Bei einer ausreichenden Übereinstimmung haben sich die Nutzerdaten nicht verändert und die Integrität der Nutzerdaten ist sichergestellt. Durch die Verwendung einer Prüfwertfunktion, beispielsweise eine Hashfunktion, müssen somit nicht die beliebig langen Nutzerdaten verglichen und abgespeichert werden, sondern nur der kürzere Prüfwert, insbesondere der erste Prüfwert. Die sichere Speicherung des ersten Prüfwertes im Prozessor spielt dabei eine entscheidende Rolle.

Durch beispielsweise eine Implementierung des Verfahrens mittels FPGAs in eingebetteten Systemen kann der Zugriff auf sicherheitsrelevante Daten, beispielsweise der erste Prüfwert, durch die prozessorexterne Komponente, beispielsweise Softwarekomponenten, vermieden werden.

Mit dem Verfahren ist es möglich, die erste Prüfsumme manipulationssicher direkt auf dem Prozessor abzuspeichern. Dies kann vorzugsweise pro sicherheitsgeschütztem Speichermodul des Prozessors ein Mal pro Laufzeit passieren. Bei einer Integritätsüberprüfung wird der aktuelle Prüfwert, beispielsweise der zweite Prüfwert, an den Prozessor übergeben und mit dem gespeicherten ersten Prüfwert verglichen. Bei übereinstimmendem Wert ist die Integrität sichergestellt.

Falls die Prüfwerte nicht übereinstimmen, wurden die Daten geändert. Dieses Ergebnis teilt der Prozessor beispielsweise einer System-Software des Gerätes mit, die dann beispielsweise die Ausführung des Programmcodes stoppen kann.

Als Prüfwertfunktion können beispielsweise das SHA256-Verfahren oder das SHA3-Verfahren eingesetzt werden.

In einer Variante ist auf dem Prozessor ein sicherheitsgeschütztes Speichermodul für eine Vielzahl von ersten Prüfwerten implementiert, z.B. auf Basis von Block RAMs oder Flip-Flops.

In einer weiteren Variante ist das Vergleichen mittels eines Vergleichsmoduls, beispielsweise eines Komparators, implementiert, um den ersten Prüfwert mit dem zweiten Prüfwert zu vergleichen.

In einer weiteren Variante entscheidet ein Steuermodul, ob ein Prüfwert abgespeichert oder verglichen werden soll. Das Steuermodul kann beispielsweise auch den sicherheitsgeschützten Betriebsmodus oder den Laufzeitmodus einschalten und/oder ausschalten.

Wurde ein erster Prüfwert einmal im sicherheitsgeschützten Speichermodul abgespeichert, kann dieser vorzugsweise bis zum Ausschalten des Geräts nicht überschrieben werden, sondern nur noch zum Vergleich verwendet werden.

In einer weiteren Variante wird zusätzlich zum ersten Prüfwert ein Geheimnis im sicherheitsgeschützten Speichermodul gespeichert. Dies kann beispielsweise als eine Parameter-übergabe an den Prozessor durch eine prozessorexterne Softwarekomponente implementiert sein, die das Geheimnis nach dem Übergeben an den Prozessor verwirft. Wird später eine Übereinstimmung des zweiten Prüfwertes mit dem ersten Prüfwert durch den Prozessor festgestellt, gibt der Prozessor das zuvor gespeicherte Geheimnis zurück.

Alternativ wird bei einem korrekten zweiten Prüfwert das Geheimnis für eine kryptographische Funktion, beispielsweise eine digitale Signatur oder eine Verschlüsselungsfunktion, genutzt.

In einer weiteren Variante ist im Prozessor zusätzlich ein Watchdog implementiert, also eine Funktion, die pro gespeichertem ersten Prüfwert spätestens nach einer vordefinierten Anzahl von Zeiteinheiten erwartet, dass ein korrekter zweiter Prüfwert geliefert wird.

Ist dies nicht der Fall, könnte die Steuerinformation andere Module oder Funktionen des Prozessors oder des Gerätes deaktivieren, beispielsweise die Netzwerkkommunikation über ein Ethernet-Netzwerk und/oder Schnittstellen und/oder kryptographische Funktionen und/oder den Hauptprozessor.

In einer weiteren Variante implementiert der Prozessor eine Prüfwertfunktion zur Berechnung des ersten Prüfwertes und/oder des zweiten Prüfwertes. Die Prüfwertfunktion kann aktiv Nutzerdaten aus dem Arbeitsspeicher laden und den ersten Prüfwert und/oder den zweiten Prüfwert über diese berechnen. Hierfür werden dem Prozessor beispielsweise die Speicheradresse und die zu überprüfende Anzahl an Bytes während des sicherheitsgeschützten Betriebsmodus übergeben. Der Prozessor kann dann selbst den ersten Prüfwert vorzugsweise während des sicherheitsgeschützten Betriebsmodus berechnen und im sicherheitsgeschützten Speichermodul speichern.

Soll der zweite Prüfwert berechnet werden, wird dem Prozessor beispielsweise eine Anweisung übermittelt, dass diese selbstständig den zweiten Prüfwert berechnen soll. Der Prozessor berechnet den zweiten Prüfwert anhand der Speicheradresse und der Anzahl von Bytes während des Laufzeitmodus und vergleicht den ersten Prüfwert mit dem zweiten Prüfwert.

Alternativ kann der Prozessor die zweite Prüfsumme selbstständig regelmäßig insbesondere innerhalb eines vordefinierten oder vordefinierbaren Zeitintervalls im Laufzeitmodus über die Nutzerdaten berechnen und anschließend mit dem ersten Prüfwert vergleichen.

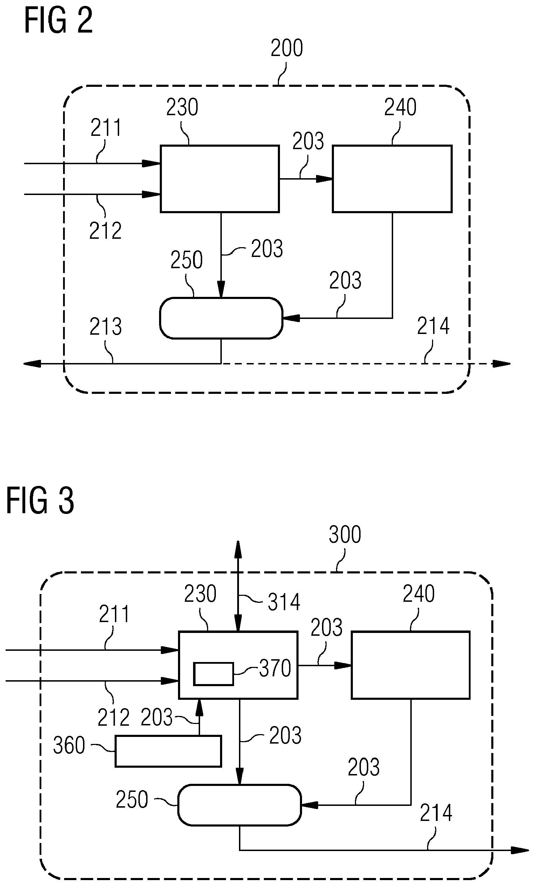

Fig. 2 zeigt einen Prozessor 200 eines zweiten Ausführungsbeispiels, der das offenbarte Verfahren implementiert.

Der Prozessor 200 umfasst eine erste Schnittstelle 211 zur Eingabe, eine zweite Schnittstelle 212 für Kommandoeingaben, eine dritte Schnittstelle 213 zum Bereitstellen einer Steuerinformation, insbesondere mit einem Ergebnis eines Vergleichs, eine optionale vierte Schnittstelle 214 zum Bereitstellen der Steuerinformation, insbesondere eine Information zum Einschalten und zum Ausschalten von Funktionen des Prozessors oder des Gerätes in dem der Prozessor verbaut ist, ein Steuermodul 20, ein sicherheitsgeschütztes Speichermodul 240 und ein Vergleichsmodul 250. Das Steuermodul 230, das sicherheitsgeschützte Speichermodul 240 und das Vergleichsmodul 250 sind über einen ersten prozessorinternen Bus kommunikativ miteinander verbunden.

Die erste Schnittstelle 211, die zweite Schnittstelle 212, die dritte Schnittstelle 213 und die vierte Schnittstelle 214 können auch als eine integrale Schnittstelle ausgebildet sein oder als zwei oder drei Schnittstellen ausgebildet sein, je nach funktionalen Anforderungen.

Das sicherheitsgeschützte Speichermodul 240 speichert einen ersten Prüfwert während eines sicherheitsgeschützten Betriebsmodus.

Das Vergleichsmodul 250 vergleicht den ersten Prüfwert mit einem zweiten Prüfwert während eines Laufzeitmodus.

Über ein Bereitstellungsmodul wird eine Steuerinformation während des Laufzeitmodus bereitgestellt, wobei die Steuerinformation ein Ergebnis des Vergleichs umfasst.

Das Bereitstellungsmodul kann beispielsweise das Steuermodul 230 sein oder aus dem Steuermodul 230 und der dritten Schnittstelle 213 und/oder der vierten Schnittstelle 214 gebildet werden.

Die erste Schnittstelle 211 dient beispielsweise der Eingabe einer Nutzerdateninformation über die Nutzerdaten. Die Nutzerdateninformation kann beispielsweise die Nutzerdaten selbst umfassen und/oder eine Speicheradresse, an der die Nutzerdaten abgelegt sind, und/oder die Anzahl der Bytes (also eine Größenabgabe) der Nutzerdaten, damit die Nutzerdaten von der Speicheradresse gelesen werden können.

Die zweite Schnittstelle 212 dient beispielsweise Kommandoeingaben. Eine Kommandoeingabe kann beispielsweise eine Anweisung zum Speichern eines Prüfwertes, beispielsweise des ersten Prüfwertes, im sicherheitsgeschützten Speichermodul umfassen. Bei einer Kommandoeingabe kann es sich auch um eine Anweisung zur Berechnung des ersten Prüfwertes und/oder des zweiten Prüfwertes und/oder eine Anweisung zum Durchführen des Vergleichs des ersten Prüfwertes mit dem zweiten Prüfwert handeln.

Die dritte Schnittstelle 213 und die optionale vierte Schnittstelle 214 dienen der Bereitstellung der Steuerinformation. Je nach Implementierung kann über die dritte Schnittstelle 213 das Ergebnis des Vergleichs des ersten Prüfwertes mit dem zweiten Prüfwert bereitgestellt werden. Über die optionale vierte Schnittstelle 214 können mittels der Steuerinformation beispielsweise Funktionen des Prozessors und/oder eines Gerätes, das den Prozessor umfasst, ausgeschaltet werden. Hierzu kann die Steuerinformation beispielsweise eine Information umfassen, die entsprechende Funktionen sperrt oder freigibt.

Mit anderen Worten zeigt Fig. 2 eine Realisierung des Verfahrens, das in Fig. 1 beschrieben wird, in Form eines Prozessors, beispielsweise eines FPGAs. Zunächst wird aus beliebigen Daten oder Nutzerdaten ein erster Prüfwert zu einem vertrauenswürdigen Zeitpunkt, hier als sicherheitsgeschützter Betriebsmodus bezeichnet, berechnet und an den Prozessor geschickt.

Durch das Senden eines Lade-Kommandos an die zweite Schnittstelle wird der erste Prüfwert im sicherheitsgeschützten Speichermodul (z.B. Block RAM) abgelegt. Dies darf pro Speicherplatz auf dem Speichermodul vorzugsweise nur ein einziges Mal während der Laufzeit des Prozessors oder des Gerätes möglich sein. Zu einem späteren Zeitpunkt kann die zweite Prüfsumme jederzeit erneut berechnet und deren Integrität durch den Prozessor überprüft werden. Dabei wird der aktuelle Prüfwert, auch zweiter Prüfwert genannt, an den Prozessor geschickt und ein Kommando, vorzugsweise über die zweite Schnittstelle, zum Vergleichen der ersten Prüfsumme mit der zweiten Prüfsumme an den Prozessor übermittelt. Der Prozessor lädt den entsprechenden ersten Prüfwert und vergleicht diesen mittels eines Komparators mit dem zweiten Prüfwert. Bei einer ausreichenden Übereinstimmung ist die Integrität gewährleistet und eine Steuerinformation, welche die Korrektheit der zweiten Prüfsumme bestätigt, wird bereitgestellt.

Bei einer unzureichenden Übereinstimmung der Prüfwerte haben sich die Daten oder Nutzerdaten und entsprechend deren Prüfwert geändert. Optional kann das Ergebnis des Vergleichs verwendet werden um Funktionen, andere Prozessoren, Module des Gerätes, das den Prozessor umfasst, oder eine Kombination hiervon zu aktivieren oder zu deaktivieren.

Fig. 3 zeigt einen Prozessor 300 eines zweiten Ausführungsbeispiels, der das offenbarte Verfahren implementiert.

Der Prozessor 300 ist eine Variante des Prozessors, der in Fig. 2 dargestellt ist. Entsprechend gelten die Beschreibungen zu Merkmalen, deren Funktionsweise und der technische Effekt analog für Fig. 3.

Der Prozessor 300 umfasst zusätzlich zu den bekannten Merkmalen aus Fig. 2 eine fünfte Schnittstelle 314, einen Watchdog 360 und ein prozessorinternes Berechnungsmodul 370, das als ein integrales Berechnungsmodul für ein erstes Berechnungsmodul und/oder ein zweites Berechnungsmodul ausgebildet sein kann. Das Berechnungsmodul 370 kann beispielsweise ein integraler Bestandteil des Steuermoduls 230 sein.

Der Prozessor wird zunächst über die erste Schnittstelle 211 eine Adresse im Speicher und eine Anzahl von Bytes übergeben, welche die Nutzerdaten und die Größe der Nutzerdaten angeben. Anschließend wird der erste Prüfwert mittels des Berechnungsmoduls 370 für die Nutzerdaten berechnet und im sicherheitsgeschützten Speichermodul 240 abgelegt. Der Watchdog 360 stößt ab diesem Zeitpunkt regelmäßig die Überprüfung der Nutzerdaten mit dem Berechnen des zweiten Prüfwertes und des Vergleichens des ersten Prüfwertes mit dem zweiten Prüfwert an.

Bei einer unzureichenden Übereinstimmung der Prüfwerte haben sich die Daten oder Nutzerdaten und entsprechend deren Prüfwert geändert. Optional kann das Ergebnis des Vergleichs verwendet werden um Funktionen, andere Prozessoren, Module des Gerätes, das den Prozessor umfasst, oder eine Kombination hiervon zu aktivieren oder zu deaktivieren.

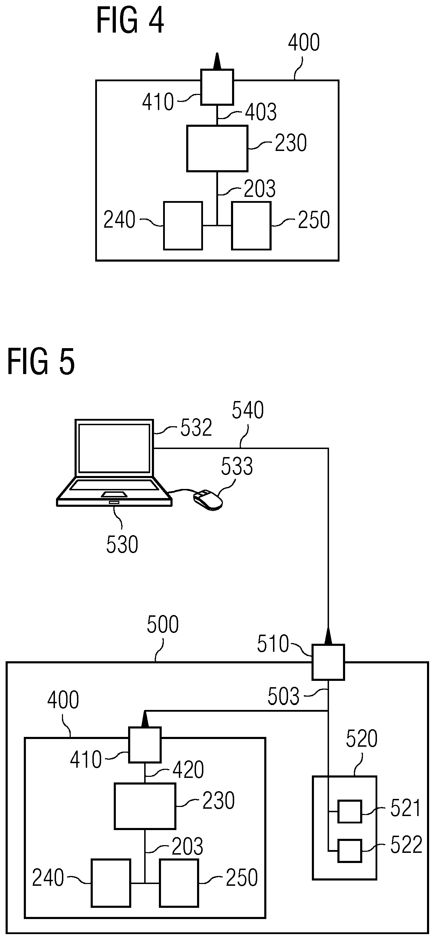

Fig. 4 zeigt einen Prozessor 400 eines zweites Ausführungsbeispiels, der das offenbarte Verfahren implementiert.

Der Prozessor 400 ist eine Variante des Prozessors, der in Fig. 2 und/oder 3 dargestellt ist. Entsprechend gelten die Beschreibungen zu Merkmalen, deren Funktionsweise und der technische Effekt analog für Fig. 4.

Der Prozessor 400 umfasst eine sechste Schnittstelle 410, welche eine integrale Schnittstelle der ersten Schnittstelle und/oder der zweiten Schnittstelle und/oder der dritten Schnittstelle und/oder der vierten Schnittstelle und/oder der fünften Schnittstelle bildet.

Die sechste Schnittstelle 410 ist entweder ein Teil des Steuermoduls 230 oder über einen zweiten internen Bus mit dem Steuermodul 230 verbunden.

Das Steuermodul 230, das Vergleichsmodul 250 und das sicherheitsgeschützte Speichermodul 240 sind mittels des ersten prozessorinternen Busses kommunikativ verbunden.

Die Bereitstellungseinrichtung wird, wie bereits in den vorhergehenden Ausführungsbeispielen erläutert, durch das Steuermodul 230 und/oder die sechste Schnittstelle 410 gebildet.

Fig. 5 zeigt ein Gerät 500 eines Ausführungsbeispiels, das einen der zuvor beschriebenen Prozessoren, also einen Prozessor, der das erfindungsgemäße Verfahren implementiert, umfasst. Bei dem Gerät 500 kann es sich zum Beispiel um ein Feldgerät oder ein Messgerät handeln.

Das Gerät 500 umfasst einen Prozessor 400 und ein Berechnungsmodul 520, das insbesondere ein integrales Berechnungsmodul aus einem ersten Berechnungsmodul 521 und einem zweiten Berechnungsmodul 522 bildet. Das Berechnungsmodul 520 ist über einen dritten Bus 503 mit der sechsten Schnittstelle 410 des Prozessors 400 kommunikativ verbunden.

In diesem Ausführungsbeispiel wird der erste Prüfwert über die Nutzerdaten von dem Gerät während der Bootphase mittels des Berechnungsmoduls 520, insbesondere dem ersten Berechnungsmodul 521, berechnet und an den Prozessor übermittelt mit den entsprechenden Kommandos, den ersten Prüfwert im sicherheitsgeschützten Speichermodul 240 abzulegen.

Hat das Gerät die Bootphase abgeschlossen und befindet sich im Laufzeitmodus, so kann mittels des Prozessors 400 die Integrität der Nutzerdaten überprüft werden. Hierzu bildet das Berechnungsmodul 520, insbesondere das zweite Berechnungsmodul 522, den zweiten Prüfwert und übermittelt diesen mit den entsprechenden Kommandos an den Prozessor 400, sodass dieser den Vergleich der zweiten Prüfsumme mit der ersten Prüfsumme durchführt und über die sechste Schnittstelle 410 dem Gerät die Steuerinformation mit dem Ergebnis des Vergleichs bereitstellt.

Das Gerät kann darüber hinaus eine siebte Schnittstelle 510 umfassen, mit dem das Gerät beispielsweise über ein Netzwerk 540, beispielsweise ein Ethernet, mit einer Workstation 530 verbunden ist. Diese Workstation kann ein Anzeigegerät 532, beispielsweise einen Monitor, und Eingabegeräte, beispielsweise eine Tastatur oder eine Computermaus 533, umfassen.

Wird beispielsweise durch den Prozessor 400 festgestellt, dass der zweite Prüfwert eine unzureichende Übereinstimmung mit dem ersten Prüfwert aufweist, kann der Prozessor eine Nachricht an die Workstation schicken und das Gerät vorzugsweise deaktivieren.

Obwohl die Erfindung im Detail durch die Ausführungsbeispiele näher illustriert und beschrieben wurde, ist die Erfindung nicht durch die offenbarten Beispiele eingeschränkt, und andere Variationen können vom Fachmann hieraus abgeleitet werden, ohne den Schutzumfang der Erfindung zu verlassen.

## Patentansprüche

1. Verfahren zur Integritätsprüfung von verschlüsselten Nutzerdaten mittels eines Prozessors (200, 300, 400), insbesondere einem FPGA, das folgende Verfahrensschritte umfasst:
- Berechnen eines ersten Prüfwertes über die verschlüsselten Nutzerdaten während eines sicherheitsgeschützten Betriebsmodus;
- Speichern des ersten Prüfwertes in einem sicherheitsgeschützten Speichermodul (240) des Prozessors (200, 300, 400) während des sicherheitsgeschützten Betriebsmodus; wobei während des sicherheitsgeschützten Betriebsmodus zusätzlich ein Geheimnis in dem sicherheitsgeschützten Speichermodul (240) gespeichert wird, wobei das Geheimnis ein kryptographischer Schlüssel zum Entschlüsseln der verschlüsselten Nutzerdaten ist;
- Berechnen eines zweiten Prüfwertes über die verschlüsselten Nutzerdaten während eines Laufzeitmodus;
- Vergleichen des ersten Prüfwertes mit dem zweiten Prüfwert durch den Prozessor (200, 300, 400) während des Laufzeitmodus;
- Bereitstellen einer Steuerinformation durch den Prozessor (200, 300, 400) während des Laufzeitmodus, wobei die Steuerinformation ein Ergebnis des Vergleichens umfasst; wobei falls beim Vergleichen des ersten Prüfwertes und des zweiten Prüfwertes eine ausreichende Übereinstimmung festgestellt wird, beim Bereitstellen zusätzlich das Geheimnis bereitgestellt wird;wobei der sicherheitsgeschützte Betriebsmodus und der Laufzeitmodus ein Betriebsmodus des Prozessors (200, 300, 400) und/oder eines Gerätes (500), das den Prozessor (200, 300, 400) aufweist, ist;
wobei sich der Laufzeitmodus und der sicherheitsgeschützte Betriebsmodus gegenseitig ausschließen.

2. Verfahren nach Anspruch 1, wobei das sicherheitsgeschützte Speichermodul (240) während einer Laufzeit des Prozessors (200, 300, 400) einmalig beschreibbar ist oder das sicherheitsgeschützte Speichermodul (240) einmalig beschreibbar ist.

3. Verfahren nach Anspruch 1 oder 2, wobei falls beim Vergleichen des ersten Prüfwertes und des zweiten Prüfwertes eine ausreichende Übereinstimmung festgestellt wird, das Geheimnis als ein Eingabeparameter für eine kryptographische Funktion verwendet wird.

4. Verfahren nach einem der vorhergehenden Ansprüche, wobei innerhalb eines vorgegebenen Zeitintervalls der zweite Prüfwert zum Vergleichen erwartet wird, wobei das vorgegebene Zeitintervall insbesondere mittels eines Watchdogs (360) berechnet wird, wobei bei einem Überschreiten des vorgegebenen Zeitintervalls die Steuerinformation bereitgestellt wird.

5. Verfahren nach einem der vorhergehenden Ansprüche, wobei der Prozessor (200, 300, 400) den ersten Prüfwert und/oder den zweiten Prüfwert mittels einer prozessorintern implementierten Prüfwertfunktion berechnet.

6. Verfahren nach einem der vorhergehenden Ansprüche, wobei mit einer Softwarekomponente der erste Prüfwert und/oder der zweite Prüfwert mittels einer prozessorextern implementierten Prüfwertfunktion berechnet wird.

7. Prozessor (200, 300, 400) zur Integritätsprüfung von verschlüsselten Nutzerdaten, aufweisend:
- ein sicherheitsgeschütztes Speichermodul (240) zum Speichern eines ersten Prüfwertes über die verschlüsselten Nutzerdaten während eines sicherheitsgeschützten Betriebsmodus des Prozessors, wobei während des sicherheitsgeschützten Betriebsmodus zusätzlich ein Geheimnis in dem sicherheitsgeschützten Speichermodul (240) gespeichert wird, wobei das Geheimnis ein kryptographischer Schlüssel zum Entschlüsseln der verschlüsselten Nutzerdaten ist;
- ein Vergleichsmodul (250) zum Vergleichen des ersten Prüfwertes mit einem zweiten Prüfwert über die verschlüsselten Nutzerdaten während eines Laufzeitmodus des Prozessors (200, 300, 400), wobei sich der Laufzeitmodus und der sicherheitsgeschützte Betriebsmodus gegenseitig ausschließen;
- ein Bereitstellungsmodul (230) zum Bereitstellen einer Steuerinformation während des Laufzeitmodus, wobei die Steuerinformation ein Ergebnis des Vergleichs umfasst, wobei falls beim Vergleichen des ersten Prüfwertes und des zweiten Prüfwertes eine ausreichende Übereinstimmung festgestellt wird, beim Bereitstellen zusätzlich das Geheimnis bereitgestellt wird.

8. Prozessor nach Anspruch 7, wobei der Prozessor (200, 300, 400) ein erstes Übertragungsmodul zum Übertragen des ersten Prüfwertes während des sicherheitsgeschützten Betriebsmodus und/oder zum Übertragen des zweiten Prüfwertes während des Laufzeitmodus umfasst.

9. Gerät (500) zur Integritätsprüfung von verschlüsselten Nutzerdaten, aufweisend:
- einen Prozessor (200, 300, 400), insbesondere einen Prozessor nach einem der Ansprüche 9-10, umfassend,
- ein sicherheitsgeschütztes Speichermodul (240) zum Speichern eines ersten Prüfwertes über die verschlüsselten Nutzerdaten während eines sicherheitsgeschützten Betriebsmodus, wobei während des sicherheitsgeschützten Betriebsmodus zusätzlich ein Geheimnis in dem sicherheitsgeschützten Speichermodul (240) gespeichert wird, wobei das Geheimnis ein kryptographischer Schlüssel zum Entschlüsseln der verschlüsselten Nutzerdaten ist;
- ein Vergleichsmodul (250) zum Vergleichen des ersten Prüfwertes mit einem zweiten Prüfwert über die verschlüsselten Nutzerdaten während eines Laufzeitmodus;
- ein Bereitstellungsmodul (230) zum Bereitstellen einer Steuerinformation während des Laufzeitmodus, wobei die Steuerinformation ein Ergebnis des Vergleichens umfasst, falls beim Vergleichen des ersten Prüfwertes und des zweiten Prüfwertes eine ausreichende Übereinstimmung festgestellt wird, beim Bereitstellen zusätzlich das Geheimnis bereitgestellt wird;
- ein erstes Berechnungsmodul (521) zum Berechnen des ersten Prüfwertes über die verschlüsselten Nutzerdaten während des sicherheitsgeschützten Betriebsmodus;
- ein zweiten Berechnungsmodul (522) zum Berechnen eines zweiten Prüfwertes über die verschlüsselten Nutzerdaten während des Laufzeitmodus
wobei der sicherheitsgeschützte Betriebsmodus und der Laufzeitmodus ein Betriebsmodus des Prozessors (200, 300, 400) und/oder des Gerätes (500), das den Prozessor (200, 300, 400) aufweist, ist,
wobei sich der Laufzeitmodus und der sicherheitsgeschützte Betriebsmodus gegenseitig ausschließen.

10. Gerät nach Anspruch 9, wobei das Gerät (500) ein zweites Übertragungsmodul zum Übertragen des ersten Prüfwertes an den Prozessor (200, 300, 400) während des sicherheitsgeschützten Betriebsmodus umfasst und/oder ein drittes Übertragungsmodul zum Übertragen des zweiten Prüfwertes an den Prozessor (200, 300, 400) während des Laufzeitmodus umfasst.

11. Gerät nach einem der Ansprüche 9 oder 10,
wobei das Gerät (500) ein Verarbeitungsmodul zum Verarbeiten der Steuerinformation des Prozessors (200, 300, 400) umfasst.

12. Computerprogrammprodukt mit Programmbefehlen zur Durchführung des Verfahrens nach einem der Ansprüche 1-6.

13. Computerprogrammprodukt mit Programmbefehlen für ein Erstellungsgerät, das mittels der Programmbefehle konfiguriert wird, den Prozessor (200, 300, 400) nach einem der Ansprüche 7 oder 8 zu erstellen.

14. Bereitstellungsvorrichtung für das Computerprogrammprodukt nach Anspruch 12 oder 13, wobei die Bereitstellungsvorrichtung das Computerprogrammprodukt speichert und/oder bereitstellt.

## Claims

1. Method for checking the integrity of encrypted user data by means of a processor (200, 300, 400), in particular an FPGA, which comprises the following method steps:
- calculating a first check value over the encrypted user data during a security-protected operating mode;
- storing the first check value in a security-protected memory module (240) of the processor (200, 300, 400) during the security-protected operating mode; wherein a secret is additionally stored in the security-protected memory module (240) during the security-protected operating mode, wherein the secret is a cryptographic key for decrypting the encrypted user data;
- calculating a second check value over the encrypted user data during a runtime mode;
- comparing the first check value with the second check value by means of the processor (200, 300, 400) during the runtime mode;
- providing control information by means of the processor (200, 300, 400) during the runtime mode, wherein the control information comprises a result of the comparison; wherein, if a sufficient match is established in the comparison of the first check value and the second check value, the secret is additionally provided during the provisioning; wherein the security-protected operating mode and the runtime mode is an operating mode of the processor (200, 300, 400) and/or of a device (500) that comprises the processor (200, 300, 400);
wherein the runtime mode and the security-protected operating mode are mutually exclusive.

2. Method according to Claim 1, wherein the security-protected memory module (240) is once-writable during a runtime of the processor (200, 300, 400), or the security-protected memory module (240) is once-writable.

3. Method according to Claim 1 or 2, wherein, if a sufficient match is established in the comparison of the first check value and the second check value, the secret is used as an input parameter for a cryptographic function.

4. Method according to one of the preceding claims, wherein the second check value is expected for the comparison within a predefined time interval, wherein the predefined time interval is calculated, in particular, by means of a watchdog (360), wherein the control information is provided if the predefined time interval is exceeded.

5. Method according to one of the preceding claims, wherein the processor (200, 300, 400) calculates the first check value and/or the second check value by means of a check value function implemented inside the processor.

6. Method according to one of the preceding claims, wherein the first check value and/or the second check value are/is calculated with a software component by means of a check value function implemented outside the processor.

7. Processor (200, 300, 400) for checking the integrity of encrypted user data, having:
- a security-protected memory module (240) for storing a first check value over the encrypted user data during a security-protected operating mode of the processor, wherein a secret is additionally stored in the security-protected memory module (240) during the security-protected operating mode, wherein the secret is a cryptographic key for decrypting the encrypted user data;
- a comparison module (250) for comparing the first check value with a second check value over the encrypted user data during a runtime mode of the processor (200, 300, 400), wherein the runtime mode and the security-protected operating mode are mutually exclusive;
- a provisioning module (230) for providing control information during the runtime mode, wherein the control information comprises a result of the comparison, wherein, if a sufficient match is established in the comparison of the first check value and the second check value, the secret is additionally provided during the provisioning.

8. Processor according to Claim 7, wherein the processor (200, 300, 400) comprises a first transmission module for transmitting the first check value during the security-protected operating mode and/or for transmitting the second check value during the runtime mode.

9. Device (500) for checking the integrity of encrypted user data, having:
- a processor (200, 300, 400), in particular a processor according to either of Claims 9-10, comprising:
- a security-protected memory module (240) for storing a first check value over the encrypted user data during a security-protected operating mode, wherein a secret is additionally stored in the security-protected memory module (240) during the security-protected operating mode, wherein the secret is a cryptographic key for decrypting the encrypted user data;
- a comparison module (250) for comparing the first check value with a second check value over the encrypted user data during a runtime mode;
- a provisioning module (230) for providing control information during the runtime mode, wherein the control information comprises a result of the comparison, wherein, if a sufficient match is established in the comparison of the first check value and the second check value, the secret is additionally provided during the provisioning;
- a first calculation module (521) for calculating the first check value over the encrypted user data during the security-protected operating mode;
- a second calculation module (522) for calculating a second check value over the encrypted user data during the runtime mode,
wherein the security-protected operating mode and the runtime mode is an operating mode of the processor (200, 300, 400) and/or of the device (500) that comprises the processor (200, 300, 400);
wherein the runtime mode and the security-protected operating mode are mutually exclusive.

10. Device according to Claim 9, wherein the device (500) comprises a second transmission module for transmitting the first check value to the processor (200, 300, 400) during the security-protected operating mode and/or a third transmission module for transmitting the second check value to the processor (200, 300, 400) during the runtime mode.

11. Device according to either of Claims 9 and 10, wherein the device (500) comprises a processing module for processing the control information of the processor (200, 300, 400).

12. Computer program product with program commands to carry out the method according to one of Claims 1-6.

13. Computer program product with program commands for a creation device which is configured by means of the program commands to create the processor (200, 300, 400) according to either of Claims 7 and 8.

14. Provisioning apparatus for the computer program product according to Claim 12 or 13, wherein the provisioning apparatus stores and/or provides the computer program product.

## Revendications

1. Procédé permettant la vérification d'intégrité de données d'utilisateurs cryptées au moyen d'un processeur (200, 300, 400), en particulier d'un FPGA, qui comprend les étapes de procédé suivantes :
- calcul d'une première valeur de vérification concernant les données d'utilisateurs cryptées pendant un mode de fonctionnement sécurisé ;
- mémorisation de la première valeur de vérification dans un module de mémorisation sécurisé (240) du processeur (200, 300, 400) pendant le mode de fonctionnement sécurisé ; dans lequel pendant le mode de fonctionnement sécurisé un secret est en outre mémorisé dans le module de mémorisation sécurisé (240), dans lequel le secret est une clé cryptographique permettant le décryptage des données d'utilisateurs cryptées ;
- calcul d'une seconde valeur de vérification concernant les données d'utilisateurs cryptées pendant un mode de temps de service ;
- comparaison de la première valeur de vérification avec la seconde valeur de vérification par le biais du processeur (200, 300, 400) pendant le mode de temps de service ;
- mise à disposition d'une information de commande par le biais du processeur (200, 300, 400) pendant le mode de temps de service, dans lequel l'information de commande comprend un résultat de la comparaison ; dans lequel dans le cas où lors de la comparaison de la première valeur de vérification et de la seconde valeur de vérification une concordance suffisante est constatée, lors de la mise à disposition le secret est en outre mis à disposition ; dans lequel le mode de fonctionnement sécurisé est mis à disposition ; dans lequel le mode de fonctionnement sécurisé et le mode de temps de service sont un mode de fonctionnement du processeur (200, 300, 400) et/ou d'un appareil (500) qui comprend le processeur (200, 300, 400) ;
dans lequel le mode de temps de service et le mode de fonctionnement sécurisé s'excluent mutuellement.

2. Procédé selon la revendication 1, dans lequel le module de mémorisation sécurisé (240) est inscriptible une seule fois pendant un temps de service du processeur (200, 300, 400) ou le mode de mémorisation sécurisé (240) est inscriptible une seule fois.

3. Procédé selon la revendication 1 ou 2, dans lequel dans le cas où lors de la comparaison de la première valeur de vérification et de la seconde valeur de vérification une concordance suffisante est constatée, le secret est utilisé en tant que paramètre d'entrée pour une fonction cryptographique.

4. Procédé selon l'une quelconque des revendications précédentes, dans lequel à l'intérieur d'un intervalle de temps prédéterminé la seconde valeur de vérification est élargie pour une comparaison, dans lequel l'intervalle de temps prédéterminé est calculé en particulier au moyen d'un système de surveillance (360), dans lequel l'information de commande est mise à disposition lors d'un dépassement par le haut de l'intervalle de temps prédéterminé.

5. Procédé selon l'une quelconque des revendications précédentes, dans lequel le processeur (200, 300, 400) calcule la première valeur de vérification et/ou la seconde valeur de vérification au moyen d'une fonction de valeurs de vérification implémentée à l'intérieur du processeur.

6. Procédé selon l'une quelconque des revendications précédentes, dans lequel avec un composant logiciel la première valeur de vérification et/ou la seconde valeur de vérification sont calculées au moyen d'une fonction de valeurs de vérification implémentée à l'extérieur du processeur.

7. Processeur (200, 300, 400) permettant la vérification d'intégrité de données d'utilisateurs cryptées, comprenant :
- un module de mémorisation sécurisé (240) permettant la mémorisation d'une première valeur de vérification concernant les données d'utilisateurs cryptées pendant un mode de fonctionnement sécurisé du processeur, dans lequel pendant le mode de fonctionnement sécurisé un secret est en outre mémorisé dans le module de mémorisation sécurisé (240), dans lequel le secret est une clé cryptographique permettant le décryptage des données d'utilisateurs cryptées ;
- un module de comparaison (250) permettant la comparaison de la première valeur de vérification avec une seconde valeur de vérification concernant les données d'utilisateurs cryptées pendant un mode de temps de service du processeur (200, 300, 400), dans lequel le mode de temps de service et le mode de fonctionnement sécurisé s'excluent mutuellement ;
- un module de mise à disposition (230) permettant la mise à disposition d'une information de commande pendant le mode de temps de service, dans lequel l'information de commande comprend un résultat de la comparaison, dans lequel lors de la comparaison de la première valeur de vérification et de la seconde valeur de vérification une concordance suffisante est constatée, lors de la mise à disposition le secret est en outre mis à disposition.

8. Processeur selon la revendication 7, dans lequel le processeur (200, 300, 400) comprend un premier module de transmission permettant la transmission de la première valeur de vérification pendant le mode de fonctionnement sécurisé et/ou permettant la transmission de la seconde valeur de vérification pendant le mode de temps de service.

9. Appareil (500) permettant la vérification d'intégrité de données d'utilisateurs cryptées, comprenant :
- un processeur (200, 300, 400), en particulier un processeur selon l'une quelconque des revendications 9 à 10, comprenant :
- un module de mémorisation sécurisé (240) permettant la mémorisation d'une première valeur de vérification concernant les données d'utilisateurs cryptées pendant un mode de fonctionnement sécurisé, dans lequel pendant le mode de fonctionnement sécurisé un secret est en outre mis en mémoire dans le module de mémorisation sécurisé (240), dans lequel le secret est une clé cryptographique permettant le décryptage des données d'utilisateurs cryptées ;
- un module de comparaison (250) permettant la comparaison de la première valeur de vérification avec une seconde valeur de vérification concernant les données d'utilisateurs cryptées pendant un mode de temps de service ;
- un mode de mise à disposition (230) permettant la mise à disposition d'une information de commande pendant le mode de temps de service, dans lequel l'information de commande comprend un résultat de la comparaison, dans le cas où lors de la comparaison de la première valeur de vérification et de la seconde valeur de vérification une concordance suffisante est constatée, lors de la mise à disposition le secret est en outre mis à disposition ;
- un premier module de calcul (521) permettant le calcul de la première valeur de vérification concernant les données d'utilisateurs cryptées pendant le mode de fonctionnement sécurisé ;
- un second module de calcul (522) permettant le calcul d'une seconde valeur de vérification concernant les données d'utilisateurs cryptées pendant le mode de temps de service ;
dans lequel le mode de fonctionnement sécurisé et le mode de temps de service sont un mode de fonctionnement du processeur (200, 300, 400) et/ou de l'appareil (500) qui comprend le processeur (200, 300, 400),
dans lequel le mode de temps de service et le mode de fonctionnement sécurisé s'excluent mutuellement.

10. Appareil selon la revendication 9, dans lequel l'appareil (500) comprend un deuxième module de transmission permettant la transmission de la première valeur de vérification au processeur (200, 300, 400) pendant le mode de fonctionnement sécurisé et/ou comprend un troisième module de transmission permettant la transmission de la seconde valeur de vérification au processeur (200, 300, 400) pendant le mode de temps de service.

11. Appareil selon l'une quelconque des revendications 9 ou 10, dans lequel l'appareil (500) comprend un module de traitement permettant le traitement de l'information de commande du processeur (200, 300, 400).

12. Produit de programme informatique avec des instructions de programme permettant l'exécution du procédé selon l'une quelconque des revendications 1 à 6.

13. Produit de programme informatique avec des instructions de programme pour un appareil de production qui est configuré au moyen des instructions de programme pour produire le processeur (200, 300, 400) selon l'une quelconque des revendications 7 ou 8.

14. Dispositif de mise à disposition pour le produit de programme informatique selon la revendication 12 ou 13, dans lequel le dispositif de mise à disposition mémorise et/ou met à disposition le produit de programme informatique.
